# EUROPEAN PATENT APPLICATION

(11) **EP 4 576 882 A1**
(43) Date of publication of application: **25.06.2025**
(21) Application number: 23856057.7
(22) Date of filing: 22.03.2023
(51) Int. Cl.: H04W 52/02

(54) **DATA PROCESSING METHOD, BASE STATION, AND STORAGE MEDIUM**

(30) Priority: 23.08.2022 CN 202211010766
(71) Applicant: ZTE Corporation, Shenzhen, Guangdong 518057 (CN)
(72) Inventor: ZHAN, Yong, Shenzhen, Guangdong 518057 (CN); SUN, Wei, Shenzhen, Guangdong 518057 (CN)
(74) Representative: Savi, Massimiliano
(86) International application number: PCT/CN2023/083211
(87) International publication number: WO 2024/040961

(57) **Abstract**

The present application discloses a data processing method. a base station, and a storage medium. The data processing method is applied to the base station. The method comprises: acquiring energy-saving strategy constraint information and a service load of a target network covered by the base station (S100); analyzing the service load of the target network to obtain load information of the target network (S200); predicting the target network according to a preset energy-saving strategy and the load information to obtain prediction information of the target network (S300); according to the load information, the prediction information and the energy-saving strategy constraint information, determining a target energy-saving strategy corresponding to the target network (S400); and issuing the target energy-saving strategy to a cell in the target network (S500).

## Description

### CROSS-REFERENCE TO RELATED APPLICATION

This application is filed on the basis of Chinese patent application No. 202211010766.9 filed August 23, 2022, and claims priority to the Chinese patent application, the entire contents of which are incorporated herein by reference.

### TECHNICAL FIELD

The present disclosure relates to the technical field of communication, and in particular, to a data processing method, a base station, and a storage medium.

### BACKGROUND

With the development of mobile communication technologies, 5th-generation mobile communication technology (5G) base stations have entered the stage of large-scale deployment. Although 5G base stations can provide more powerful communication services, the accompanying high energy consumption also greatly increases the operating cost of mobile operators. Therefore, how to reduce the energy consumption of 5G base stations has become an urgent problem to be solved by mobile operators. Base station energy-saving technologies commonly used in the industry include, but not limited to, symbol-level sleep, slot-level sleep, and long-term sleep. Long-term sleep can shut down the base station components to the greatest extent and therefore can obtain the greatest energy-saving benefits, but also require the longest wake-up time. Apparently, setting a base station to a sleep state, especially a long-term sleep state that requires a long wake-up time, will have a negative impact on user experience. Therefore, how to deliver an appropriate energy-saving strategy to the base station to balance the energy consumption of the base station and user experience is the core issue of base station energy saving.

### SUMMARY

Embodiments of the present disclosure provide a data processing method, a base station, and a storage medium.

In accordance with a first aspect of the present disclosure, the data processing method is applied to a base station and include: acquiring energy-saving strategy constraint information and a service load of a target network covered by the base station, where the energy-saving strategy constraint information is used for representing a constraint condition that the target network needs to meet to achieve an energy-saving intention, and the energy-saving intention is formulated by a cell in a region where the target network is located; analyzing the service load of the target network to obtain load information of the target network; performing prediction for the target network according to a preset energy-saving strategy and the load information to obtain prediction information of the target network; determining a target energy-saving strategy corresponding to the target network according to the load information, the prediction information, and the energy-saving strategy constraint information; and delivering the target energy-saving strategy to a cell in the target network.

In accordance with a second aspect of the present disclosure, an embodiment provides a base station, including: a memory, a processor, and a computer program stored in the memory and executable by the processor, where the computer program, when executed by the processor, causes the processor to implement the data processing method in accordance with the first aspect.

In accordance with a third aspect of the present disclosure, an embodiment provides a computer-readable storage medium, storing a computer-executable program which, when executed by a computer, causes the computer to implement the data processing method in accordance with the first aspect and the second aspect.

### BRIEF DESCRIPTION OF DRAWINGS

FIG. 1 is a schematic diagram of a network architecture configured for executing a data processing method according to an embodiment of the present disclosure;
FIG. 2 is a flowchart of a data processing method according to an embodiment of the present disclosure;
FIG. 3 is a flowchart of a data processing method according to another embodiment of the present disclosure;
FIG. 4 is a flowchart of S200 in FIG. 2;
FIG. 5 is a flowchart of S300 in FIG. 2;
FIG. 6 is a flowchart of S320 in FIG. 5;
FIG. 7 is a flowchart of S400 in FIG. 2;
FIG. 8 is a schematic diagram of a coverage analysis of a target network according to an embodiment of the present disclosure; and
FIG. 9 is a schematic structural diagram of a base station according to an embodiment of
the present disclosure.

### DETAILED DESCRIPTION

To make the objects, technical schemes, and advantages of the present disclosure clear, the present disclosure is described in further detail in conjunction with accompanying drawings and embodiments. It is to be understood that the embodiments described herein are merely used for illustrating the present disclosure, and are not intended to limit the present disclosure.

It should be noted that in the description of the embodiments of the present disclosure, the terms such as "first", "second" and the like in the description, claims, and accompanying drawings are merely used for distinguishing between similar objects, and are not intended to indicate or imply relative importance, or implicitly point out the number of the indicated technical features, or implicitly point out the order of the indicated technical features. The term "at least one" means one or more and the term "a plurality of" means two or more. The term "and/or" is used for describing an association between associated objects and representing that three associations may exist. For example, "A and/or B" may indicate that only A exists, only B exists, and both A and B exist, where A and B may be singular or plural. The character "/" generally indicates an "or" relation between the associated objects. Although functional modules have been divided in the schematic diagrams of apparatuses and logical orders have been shown in the flowcharts, in some cases, the modules may be divided in a different manner, or the steps shown or described may be executed in an order different from the orders as shown in the flowcharts.

In addition, the technical features involved in various embodiments of the present disclosure described below can be combined with each other if not in collision.

Embodiments of the present disclosure provide a data processing method, an apparatus, and a storage medium. First, energy-saving strategy constraint information and a service load of a target network covered by a base station are acquired, such that a constraint condition that the target network needs to meet to achieve an energy-saving intention can be determined. Next, the service load of the target network is analyzed to obtain load information of the target network. Then, prediction is performed for the target network according to a preset energy-saving strategy and the load information to obtain prediction information of the target network under each preset energy-saving strategy, thus obtaining a communication quality status and the like of the target network. Finally, a target energy-saving strategy corresponding to the target network is determined according to the load information, the prediction information, and the energy-saving strategy constraint information. Under the condition that energy-saving constraint information is satisfied, energy consumption power, quality of service, etc., of a designated network can be guaranteed, and a target energy-saving strategy can be delivered to a cell in the target network, such that the base station can provide better network service quality while saving energy, and the energy consumption of the base station and the quality of service of terminal devices can be balanced, thereby improving user experience.

The embodiments of the present disclosure will be further described in detail below in conjunction with the accompanying drawings.

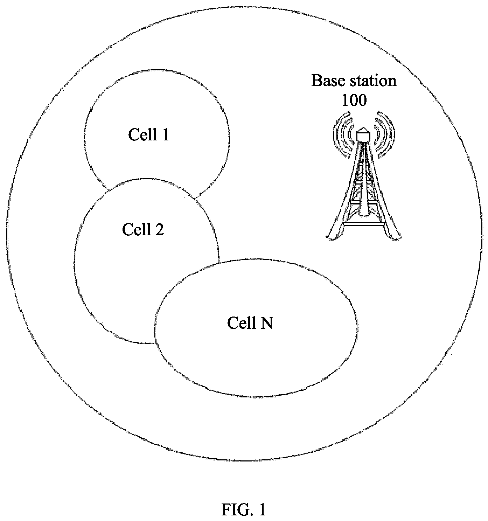

FIG. 1 is a schematic diagram of a network architecture configured for executing a data processing method according to an embodiment of the present disclosure.

In the embodiment shown in FIG. 1, the network architecture includes a base station 100, and the base station 100 generates a plurality of cells according to coverage angles. As shown in FIG. 1, the base station 100 generates a cell 1, a cell 2, ..., and a cell N, and performs the following data processing operations through the generated cells.

In some embodiments, a cell specifies a constraint condition that a target network needs to meet in order to achieve the energy-saving intention. Then, a service load in the target network within a period of time is analyzed to obtain cell-level and network-level load information of the target network. Then, prediction is performed for the target network according to a preset energy-saving strategy and the load information to obtain prediction information of the target network. In other words, a plurality of cells predict energy consumption information and quality of service of the target network under each preset energy-saving strategy according to the load information to obtain energy consumption information and terminal device information. Finally, a target energy-saving strategy corresponding to the target network is determined according to the load information and the prediction information, and sent to a cell in the target network. As such, an energy-saving strategy that can most probably achieve an intended goal under an intention constraint condition can be selected, so as to strike a balance between the energy consumption of the base station and the quality of service experienced by users in the target network.

The network architecture and application scenarios described in the embodiments of the present disclosure are for the purpose of illustrating the technical schemes of the embodiments of the present disclosure more clearly, and do not constitute a limitation on the technical schemes provided in the embodiments of the present disclosure. Those having ordinary skills in the art may know that with the evolution of the network topology and the emergence of new application scenarios, the technical schemes provided in the embodiments of the present disclosure are also applicable to similar technical problems.

Those having ordinary skills in the art may understand that the network architecture shown in FIG. 1 do not constitute a limitation to the embodiments of the present disclosure, and more or fewer components than those shown in the figure may be included, or some components may be combined, or a different component arrangement may be used.

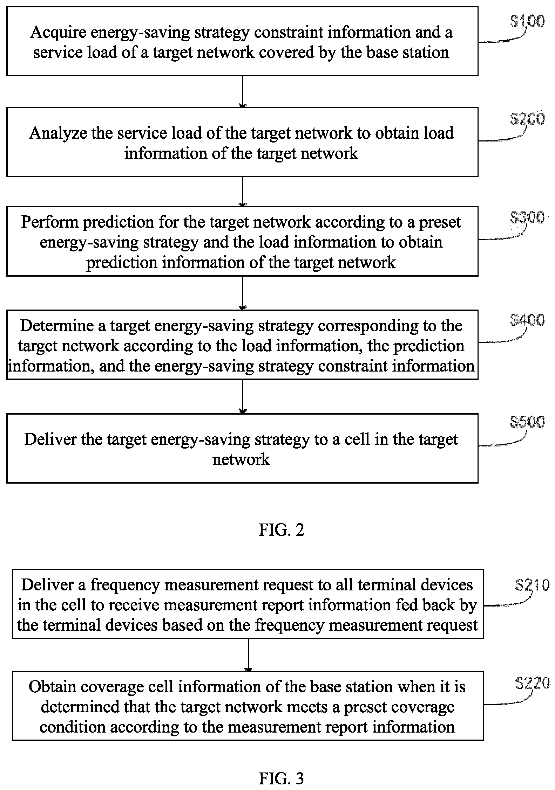

FIG. 2 is a flowchart of a data processing method according to an embodiment of the present disclosure. The data processing method is applied to, for example, but not limited to, a base station, and includes, but not limited to, the following steps S100 to S500.

At S100, energy-saving strategy constraint information and a service load of a target network covered by the base station are acquired.

It should be noted that the energy-saving strategy constraint information is used for representing a constraint condition that the target network needs to meet to achieve an energy-saving intention, and the energy-saving intention is formulated by a cell in a region where the target network is located.

In some embodiments, first, energy-saving strategy constraint information and a service load of a target network covered by the base station are acquired, for subsequently determining a target energy-saving strategy. The energy-saving constraint information is used for defining a scenario in which the target network is located, a condition to be satisfied by the target network, a goal to be achieved by the target network, and the like, and is not particularly limited in this embodiment.

It can be understood that the service load includes cell-level load information and network-level load information of the target network.

It should be noted that the energy-saving intention may be a communication rate goal, a daily average energy consumption goal, a data traffic goal, or the like specified by the cell, and is not particularly limited in this embodiment.

At S200, the service load of the target network is analyzed to obtain load information of the target network.

In some embodiments, a service of the target network is analyzed to obtain load information of the target network. The load information of the target network is obtained by analyzing the cell-level load information and the network-level load information of the target network within a period of time.

It should be noted that the service load may be represented by an indicator such as uplink or downlink Physical Resource Block (PRB) usage, Control Channel Element (CCE) usage, or data traffic of a cell, and is not particularly limited in this embodiment. For example, higher uplink or downlink PRB usage corresponding to a cell indicates a higher service load of the cell; or higher data traffic corresponding to a cell indicates a higher service load of the cell.

At S300, prediction is performed for the target network according to a preset energy-saving strategy and the load information to obtain prediction information of the target network.

In some embodiments, prediction is performed for the target network according to a preset energy-saving strategy and the load information to obtain prediction information of the target network, for subsequently formulating an energy-saving strategy corresponding to the target network.

It should be noted that the preset energy-saving strategy is not a strategy of a single energy-saving function, but a strategy rule set. For example, the strategy rule set includes various scenarios in which the preset energy-saving strategy occurs, conditions for executing the preset energy-saving strategy, goals to be achieved by the preset energy-saving strategy, etc. The predicted energy-saving strategy may also be an energy-saving mode of a cell in an energy-saving period. The energy-saving mode may be one or a combination of symbol off, channel off, carrier off, and deep sleep, and is not particularly limited in this embodiment.

At S400, a target energy-saving strategy corresponding to the target network is determined according to the load information, the prediction information, and the energy-saving strategy constraint information.

In some embodiments, load information, communication quality, energy consumption information, and the like of the target network can be obtained through analysis according to the load information, the prediction information, and the energy-saving strategy constraint information, and then the base station determines a target energy-saving strategy corresponding to the target network according to the parameters obtained through analysis, such that a balance can be struck between the energy consumption of the base station and the quality of service of terminal devices, to minimize the energy consumption of the base station while ensuring the quality of service of the target network.

At S500, the target energy-saving strategy is delivered to a cell in the target network.

In some embodiments, energy-saving strategy constraint information and a service load of a target network covered by a base station are acquired, such that a constraint condition that the target network needs to meet to achieve an energy-saving intention can be determined. Next, the service load of the target network is analyzed to obtain load information of the target network, thus obtaining information such as network quality of the target network. Then, prediction is performed for the target network according to a preset energy-saving strategy and the load information to obtain prediction information of the target network under each preset energy-saving strategy, thus obtaining a communication quality status and the like of the target network. Finally, a target energy-saving strategy corresponding to the target network is determined according to the load information, the prediction information, and the energy-saving strategy constraint information. Under the condition that energy-saving constraint information is satisfied, energy consumption power, quality of service, etc., of a designated network can be guaranteed, and a target energy-saving strategy can be delivered to a cell in the target network, such that the base station can provide better network service quality while saving energy, and a balance can be struck between the energy consumption of the base station and the quality of service of terminal devices, thereby improving user experience of the target network.

In some embodiments, the energy-saving strategy constraint information includes at least one of: intention cell information, where the intention cell information is a list of cells in the target network that have achieved the energy-saving intention; or target scenario information, where the target scenario information is used for representing an energy-saving intention to be achieved by the target network in each scenario; or intention constraint information, where the intention constraint information is used for defining a condition for the target network to achieve the energy-saving intention under the target scenario information.

It should be noted that the intention cell information is a list of cells in the target network that have achieved an energy-saving intention. For example, assuming that a first cell, a second cell, and a third cell have achieved the energy-saving intention, the list of cells includes information of the first cell, information of the second cell, and information of the third cell. The information of the first cell, the information of the second cell, and the information of the third cell each include, but not limited to, an identifier of the cell, an energy-saving parameter of the cell, and the like. The target scenario information is an energy-saving intention that the target network needs to achieve in each scenario. Energy-saving intentions achieved by different target networks in different scenarios may be the same or different. For example, an energy-saving intention that the target network needs to achieve in scenario A is that average daily energy consumption of the base station should not exceed 200 kWh, an energy-saving intention that the target network needs to achieve in scenario B is that average daily energy consumption of the base station should not exceed 350 kWh, and an energy-saving intention that the target network needs to achieve in scenario C is that an average communication rate of terminal devices in a cell is not lower than 8 megabits per second. The intention constraint information is used for defining a constraint condition that the target network needs to meet in each scenario, and is not particularly limited in this embodiment. For example, in scenario A, when an average communication rate of terminal devices in a cell is required to be not lower than 8 megabits per second, an energy-saving intention that the target network needs to achieve is that average daily energy consumption of the base station should not exceed 200 kWh; in scenario B, when average daily energy consumption of the base station is required to not exceed 200 kWh, an energy-saving intention that the target network needs to achieve is that an average communication rate of terminal devices in a cell should be not lower than 6 megabits per second.

It can be understood that the target scenario information may include an energy-saving goal, a context, etc., and the intention constraint information may include an intention constraint condition, a context, etc.

FIG. 3 is a flowchart of a data processing method according to another embodiment of the present disclosure. The method includes, but not limited to, the following steps S210 to S220.

At S210, a frequency measurement request is delivered to all terminal devices in the cell to receive measurement report information fed back by the terminal devices based on the frequency measurement request.

At S220, coverage cell information of the base station is obtained when it is determined that the target network meets a preset coverage condition according to the measurement report information.

It should be noted that the preset coverage condition is used for representing that when any one of cells covered by the target network is off, every neighboring two of the remaining cells covered by the target network overlap with each other.

In some embodiments, a frequency measurement request is delivered to all terminal devices in the cell for coverage analysis of the target network, and measurement report information fed back by the terminal devices based on the frequency measurement request is received; and coverage cell information of the base station is obtained when it is determined that the target network meets a preset coverage condition according to the measurement report information. As such, it can be determined whether a coverage hole or weak coverage occurs after any cell is turned off.

It should be noted that the coverage analysis of the target network refers to analyzing measurement report information of all terminal devices in a region where the target network is located within a period of time. The measurement report information includes intra-frequency measurement information, inter-frequency measurement information, inter-system measurement information, etc., of all the terminal devices.

It can be understood that when the measurement report information does not satisfy the preset coverage condition, indicating that a coverage hole or weak coverage occurs, the base station does not analyze the service load, deliver the preset energy-saving strategy, or perform other operations.

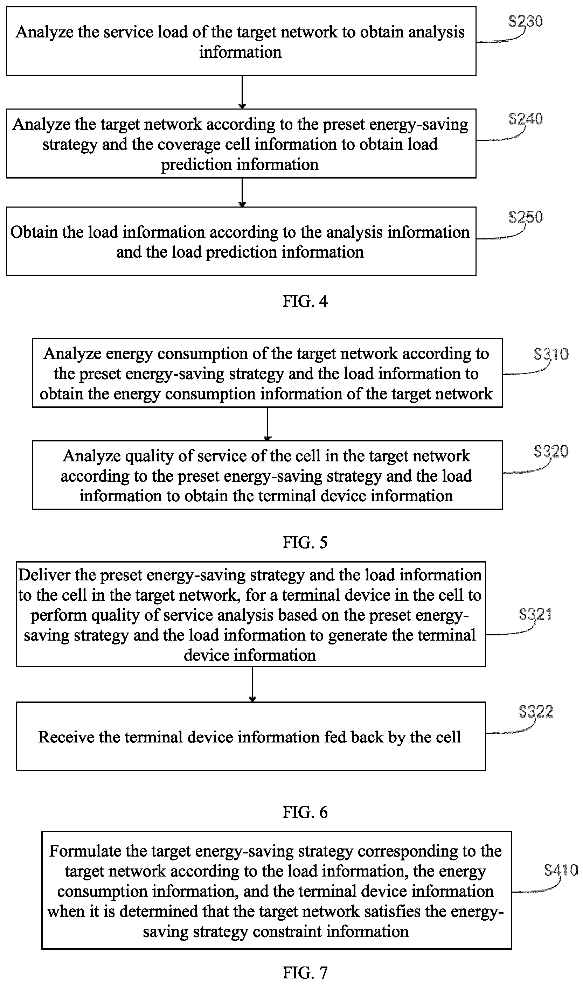

FIG. 4 shows a further description of S200 in FIG. 2. S200 includes, but not limited to, the following steps S230 to S250.

At S230, the service load of the target network is analyzed to obtain analysis information.

At S240, the target network is analyzed according to the preset energy-saving strategy and the coverage cell information to obtain load prediction information.

At S250, the load information is obtained according to the analysis information and the load prediction information.

In some embodiments, in the process of analyzing the service load of the target network to obtain the load information of the target network, first, the service load of the target network is analyzed to obtain analysis information; then, the target network is analyzed according to the preset energy-saving strategy and the coverage cell information to obtain load prediction information, such that load information of the target network under each preset energy-saving strategy can be obtained; and finally, the analysis information and the load prediction information are integrated to obtain the load information of the target network. As such, the change in the load of the target network under each preset energy-saving strategy can be accurately predicted.

It should be noted that the service load includes cell-level load information and network-level load information of the target network.

FIG. 5 shows a further description of S300 in FIG. 2. S300 includes, but not limited to, the following steps S310 to S320.

At S310, energy consumption of the target network is analyzed according to the preset energy-saving strategy and the load information to obtain the energy consumption information of the target network.

At S320, quality of service of the cell in the target network is analyzed according to the preset energy-saving strategy and the load information to obtain the terminal device information.

In some embodiments, energy consumption of the target network is predicted according to the preset energy-saving strategy and the load information to obtain energy consumption information of the target network under each preset energy-saving strategy, thus achieving the accurate prediction of the energy consumption information of the target network; and quality of service of the cell in the target network is analyzed according to the preset energy-saving strategy and the load information. As such, the quality of service of all the terminal devices in the cell under each preset energy-saving strategy can be accurately predicted, and the energy consumption and quality of service under each preset energy-saving strategy can be predicted to accurately obtain information such as user experience.

It should be noted that analyzing the energy consumption of the target network refers to performing an analysis based on software information and hardware information of the target network, and analyzing the quality of service of the cell refers to analyzing the quality of service of all the terminal devices in the cell.

FIG. 6 shows a further description of S320 in FIG. 5. S320 includes, but not limited to, the following steps S321 to S322.

At S321, the preset energy-saving strategy and the load information are delivered to the cell in the target network, for a terminal device in the cell to perform quality of service analysis based on the preset energy-saving strategy and the load information to generate the terminal device information.

At S322, the terminal device information fed back by the cell is received.

In some embodiments, the preset energy-saving strategy and the load information are delivered to the cell in the target network, such that the cell can predict the quality of service of all the terminal devices in the cell based on the preset energy-saving strategy and the load information, to obtain the terminal device information. As such, the quality of service of all the terminal devices in the cell under each preset energy-saving strategy can be accurately predicted, and the energy consumption and quality of service under each preset energy-saving strategy can be predicted.

FIG. 7 shows a further description of S400 in FIG. 2. S400 includes, but not limited to, a following step S410.

At S410, the target energy-saving strategy corresponding to the target network is formulated according to the load information, the energy consumption information, and the terminal device information when it is determined that the target network satisfies the energy-saving strategy constraint information.

In some embodiments, the target energy-saving strategy corresponding to the target network is formulated according to the load information, the energy consumption information, and the terminal device information when it is determined that the target network satisfies the energy-saving strategy constraint information. As such, the base station can provide better network service quality while saving energy, thereby improving user experience.

In some embodiments, after delivering the target energy-saving strategy to a cell in the target network, the method further includes: receiving a progress request sent by the cell, and feeding back achievement status information of the target energy-saving strategy to the cell; or sending the achievement status information of the target energy-saving strategy to the cell based on a preset time interval.

In some embodiments, after the target energy-saving strategy is delivered to the cell, a progress request sent by the cell is received, and achievement status information of the target energy-saving strategy is fed back to the cell, so as to determine whether there is an abnormal phenomenon or the like in the process of executing the target energy-saving strategy by the cell.

It should be noted that the base station may also periodically send the achievement status information of the target energy-saving strategy to the cell. The achievement status information includes communication quality, network rate, user experience, alarm information, energy consumption analysis information, and the like in the process of the terminal executing the target energy-saving strategy, which is not particularly limited in this embodiment.

To more clearly describe the process of the data processing method, embodiments are described below.

### Embodiment One:

### Embodiment One is an overall process of the data processing method.

At step 1, energy-saving strategy constraint information and a service load of the target network covered by the base station are acquired. For example, it is specified that the target network in the energy-saving strategy constraint information is "5G base station in region A"; the target scenario information is "average daily energy consumption of the 5G base station in region A should not exceed 200 kWh in any scenario"; and the intention constraint information is "a percentage of a cell-level downlink average user rate of the 5G base station being not lower than 8 megabits per second at a granularity of 15 minutes in region A in any scenario does not exceed 98%".

At step 2, a coverage analysis is performed for the target network. The coverage analysis of the target network refers to analyzing measurement report information, e.g., intra-frequency measurement information, inter-frequency measurement information, and inter-system measurement information, of all users in a region where the target network is located within a period of time, to determine whether a coverage hole or weak coverage occurs after any cell in the target network is turned off, and determine overlapping coverage information of any cell in the target network and its neighboring cells.

In some embodiments, only when it is determined that the target network meets the preset coverage condition according to the measurement report information, the coverage cell information of the base station is obtained, and when it is determined that the target network does not meet the preset coverage condition according to the measurement report information, the following operations will not be executed.

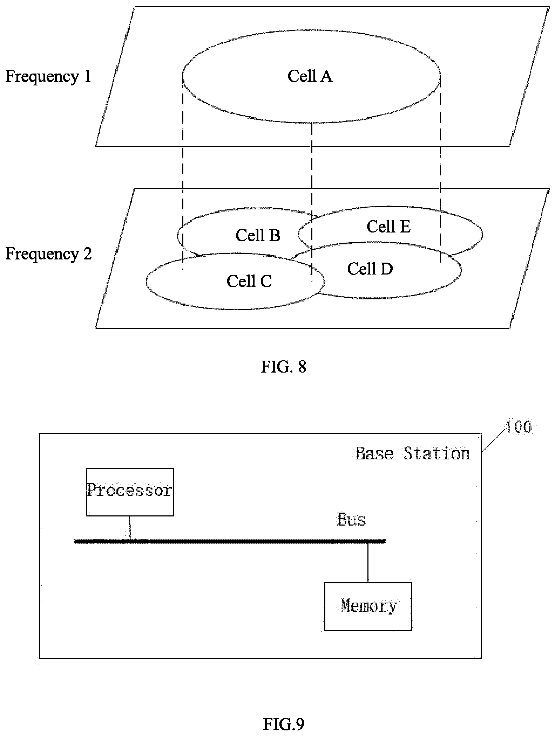

FIG. 8 is a schematic diagram of a coverage analysis of a target network according to an embodiment of the present disclosure.

It should be noted that the coverage analysis of the target network is as shown in FIG. 8. For example, there are a total of five 5G cells in region A. A frequency 1 corresponds to a cell A, and a frequency 2 corresponds to four cells: a cell B, a cell C, a cell D, and a cell E. After the cell A is turned off, users of the cell A will access the four cells corresponding to the frequency 2, and no coverage hole or weak coverage occurs. Once any once of the four cells corresponding to the frequency 2 is turned off, a coverage hole or weak coverage may occur.

At step 3, a load analysis is performed on the service load of the target network. The load analysis refers to analyzing cell-level and network-level load information of the target network within a period of time to accurately predict a cell-level load and a network-level load of the target network. In addition, the load analysis also includes accurately estimating cell-level and network-level load changes of the target network under any energy-saving strategy based on the result of the coverage analysis.

In some embodiments, service loads of the five cells in the region A in the next day are analyzed to obtain an analysis result. In this embodiment, only average downlink PRB usage of the cell at a granularity of 15 minutes is considered. In practical applications, other load-related indicators at other granularities, e.g., uplink PRB usage or the number of connected users or the number of active users of the cell at a granularity of 1 minute, may also be considered. Load statuses of the five cells in region A when no energy-saving strategy is enabled, when an energy-saving strategy 1 is enabled, and when an energy-saving strategy 2 is enabled are analyzed. The energy-saving strategy 1 does not consider an energy-saving strategy that causes the cell to enter long-term sleep, but only considers a strategy such as symbol-level sleep and slot-level sleep of the cell. Therefore, after the energy-saving strategy 1 is enabled, average downlink PRB usage of the five cells at a granularity of 15 minutes is not zero at any point, and compared with a case where no energy-saving strategy is enabled, only enabling a strategy such as symbol-level sleep and slot-level sleep in the cell significantly increases the downlink PRB usage. The energy-saving strategy 2 considers all energy-saving strategies that can be used, including an energy-saving strategy that causes the cell to enter long-term sleep. Considering that causing only "cell A" to sleep does not lead to a coverage hole, only "cell A" is caused to be in a long-term sleep state. In this case, because the other four cells bear part of the load of "cell A", the downlink PRB usage is significantly increased.

It should be noted that an energy-saving strategy is not merely enabling and disabling a single energy-saving function, but is a rule set of "what energy-saving strategy combination is to be enabled in a scenario".

At step 4, energy consumption of the target network is analyzed based on software and hardware information of the target network to obtain energy consumption analysis information, and an energy consumption status of the target network under any energy-saving strategy is accurately estimated and predicted with reference to the energy consumption analysis information and the load analysis result, to obtain energy consumption information.

In some embodiments, the present disclosure only considers normalized energy consumption of the cells at a granularity of 15 minutes. The cell A consumes a lot of energy because of its large network bandwidth. Energy consumption statuses of the five cells in region A when no energy-saving strategy is enabled, when an energy-saving strategy 1 is enabled, and when an energy-saving strategy 2 is enabled are analyzed. According to the energy-saving strategy 1, a strategy such as symbol-level sleep and slot-level sleep of the cell is enabled when the load of the cell is low, and energy consumption of the cell is significantly reduced in these periods compared with the case where no energy-saving strategy is enabled. Under the energy-saving strategy 2, the cell A is in a long-term sleep state for a lot of time. In this case, energy consumption of the cell A reaches a minimum, but because the other four cells bear part of the load of the cell A, energy consumption of the four cells at the frequency 2 in some periods is increased compared with the case where the energy-saving strategy 1 is enabled.

At step 5, quality of service of the target network is analyzed to obtain terminal device analysis information, and the terminal device analysis information of the target network under any energy-saving strategy is accurately estimated and predicted with reference to the load information, to obtain terminal device information.

In some embodiments, only an average downlink user rate of the cell at a granularity of 15 minutes is considered. In practical applications, other user experience-related indicators at other granularities, e.g., uplink user rate at a granularity of 1 minute, may also be considered. Quality of service of the target network when no energy-saving strategy is enabled, when an energy-saving strategy 1 is enabled, and when an energy-saving strategy 2 is enabled for the five cells are respectively analyzed. According to the energy-saving strategy 1, a strategy such as symbol-level sleep and slot-level sleep of the cell is enabled when the load of the cell is low, and the quality of service of the target network is significantly reduced in these periods compared with the case where no energy-saving strategy is enabled. Under the energy-saving strategy 2, the cell A is in a long-term sleep state for a lot of time. In this case, the cell A has no terminal device attached thereto, and therefore does not have quality of service information of the target network, but because the other four cells bear part of the load of the cell A, the quality of service of the target network of the four cells at the frequency 2 is further reduced compared with the case where the energy-saving strategy 1 is enabled.

At step 6, a target energy-saving strategy corresponding to the target network is determined according to the load information, the prediction information, and the energy-saving strategy constraint information, and is sent to the cell in the target network. An energy-saving strategy that can most probably achieve an intended goal while meeting the energy-saving strategy constraint information is selected based on the analysis result in step 2, and executed.

In some embodiments, based on the analysis result in step 2, when no energy-saving strategy is enabled, the average daily energy consumption of the 5G base station in region A is 222.1 kWh, and a percentage of the cell-level downlink average user rate being not lower than 8 megabits per second at a granularity of 15 minutes is 99.8%; when the energy-saving strategy 1 is enabled, the average daily energy consumption of the 5G base station in region A is 184.78 kWh, and a percentage of the cell-level downlink average user rate being not lower than 8 megabits per second at a granularity of 15 minutes is 98.1%; and when the energy-saving strategy 2 is enabled, the average daily energy consumption of the 5G base station in region A is 170.88 kWh, and a percentage of the cell-level downlink average user rate being not lower than 8 megabits per second at a granularity of 15 minutes is 97.7%. The energy-saving strategy 1 is selected according to the energy-saving strategy constraint information, and executed.

At step 7, the base station is triggered periodically or by an event to feed back an intention achievement status to the intention initiator.

In some embodiments, energy-saving strategy constraint information and a service load of a target network covered by a base station are acquired, such that a constraint condition that the target network needs to meet to achieve an energy-saving intention can be determined. Next, the service load of the target network is analyzed to obtain load information of the target network, thus obtaining information such as network quality of the target network. Then, an analysis is performed for the target network according to a preset energy-saving strategy and the load information to obtain prediction information sent by the target network and the cells in the target network according to the preset energy-saving strategy and the load information, thus obtaining a communication quality status and the like of the target network. Finally, a target energy-saving strategy corresponding to the target network is determined according to the load information, the prediction information, and sent to the cell. As such, the base station can provide better network service quality while saving energy, and a balance can be struck between the energy consumption of the base station and the quality of service of terminal devices, thereby improving user experience of the target network.

As shown in FIG. 9, an embodiment of the present disclosure provides a base station.

In some embodiments, the base station 100 includes: one or more processors and one or more memories. FIG. 9 uses one processor and one memory as an example. The processor and the memory may be connected by a bus or in other ways. Connection by a bus is used as an example in FIG. 9.

The memory, as a non-transitory computer-readable storage medium, may be configured for storing a non-transitory software program and a non-transitory computer-executable program, for example, the data processing method in the embodiments of the present disclosure. The processor executes the non-transitory software program and the non-transitory computer-executable program stored in the memory, to implement the data processing method in the embodiments of the present disclosure.

The memory may include a program storage area and a data storage area. The program storage area may store an operating system, and an application required by at least one function. The data storage area may store data and the like required for executing the data processing method in the embodiments of the present disclosure. In addition, the memory may include a high speed random access memory, and may also include a non-transitory memory, e.g., at least one magnetic disk storage device, flash memory device, or other non-transitory solid-state storage device. In some implementations, the memory may include memories located remotely from the processor, and the remote memories may be connected to the base station via a network. Examples of the network include, but not limited to, the Internet, an intranet, a local area network, a mobile communication network, and combinations thereof.

In addition, an embodiment of the present disclosure provides a computer-readable storage medium, storing a computer-executable program which, when executed by one or more control processors, for example, by a processor in FIG. 9, may cause the one or more processors to execute the data processing method in the embodiments of the present disclosure,
In addition, an embodiment of the present disclosure provides a computer program product, including a computer program or computer instructions stored in a computer-readable storage medium. The computer program or the computer instructions, when read from the computer-readable storage medium and executed by a central management unit of a computer device, may cause the central management unit to implement the data processing method according to any one of the above embodiments.

In addition, functional units in the embodiments of the present disclosure may be integrated into one processing unit, or each of the units may exist alone physically, or two or more units may be integrated into one unit. The integrated unit may be implemented in the form of hardware, or may be implemented in the form of a combination of hardware and a software functional unit.

The data processing method provided in the embodiments of the present disclosure at least has the following beneficial effects. First, energy-saving strategy constraint information and a service load of a target network covered by a base station are acquired, such that a constraint condition that the target network needs to meet to achieve an energy-saving intention can be determined. Next, the service load of the target network is analyzed to obtain load information of the target network. Then, prediction is performed for the target network according to a preset energy-saving strategy and the load information to obtain prediction information of the target network under each preset energy-saving strategy, thus obtaining a communication quality status and the like of the target network. Finally, a target energy-saving strategy corresponding to the target network is determined according to the load information, the prediction information, and the energy-saving strategy constraint information. Under the condition that energy-saving constraint information is satisfied, energy consumption or power, quality of service, etc., of a designated network can be guaranteed, and a target energy-saving strategy can be delivered to a cell in the target network, such that the base station can provide better network service quality while saving energy, and a balance can be struck between the energy consumption of the base station and the quality of service of terminal devices, thereby improving user experience.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a central management unit, such as a Central Processing Unit (CPU), a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skill in the art, the communication medium typically includes computer-readable instructions, data structures, program modules, or other data in a modulated data signal such as a carrier or other transport mechanism, and can include any information passing medium.

## Claims

1. A data processing method, applied to a base station, the method comprising:
acquiring energy-saving strategy constraint information and a service load of a target network covered by the base station, wherein the energy-saving strategy constraint information is used for representing a constraint condition that the target network needs to meet to achieve an energy-saving intention, and the energy-saving intention is formulated by a cell in a region where the target network is located;
analyzing the service load of the target network to obtain load information of the target network;
performing prediction for the target network according to a preset energy-saving strategy and the load information to obtain prediction information of the target network;
determining a target energy-saving strategy corresponding to the target network according to the load information, the prediction information, and the energy-saving strategy constraint information; and
delivering the target energy-saving strategy to a cell in the target network.

2. The data processing method of claim 1, wherein the energy-saving strategy constraint information comprises at least one of:
intention cell information, wherein the intention cell information is a list of cells in the target network that have achieved the energy-saving intention; or
target scenario information, wherein the target scenario information is used for representing an energy-saving intention to be achieved by the target network in each scenario; or
intention constraint information, wherein the intention constraint information is used for defining a condition for the target network to achieve the energy-saving intention under the target scenario information.

3. The data processing method of claim 1, wherein before analyzing the service load of the target network to obtain load information of the target network, the method further comprises:
delivering a frequency measurement request to all terminal devices in the cell to receive measurement report information fed back by the terminal devices based on the frequency measurement request; and
obtaining coverage cell information of the base station in response to determining that the target network meets a preset coverage condition according to the measurement report information, wherein the preset coverage condition is used for representing that when any one of cells covered by the target network is off, every neighboring two of the remaining cells covered by the target network overlap with each other.

4. The data processing method of claim 3, wherein analyzing the service load of the target network to obtain load information of the target network further comprises:
analyzing the service load of the target network to obtain analysis information;
analyzing the target network according to the preset energy-saving strategy and the coverage cell information to obtain load prediction information; and
obtaining the load information according to the analysis information and the load prediction information.

5. The data processing method of claim 1, wherein the prediction information comprises energy consumption information and terminal device information; and performing prediction for the target network according to a preset energy-saving strategy and the load information to obtain prediction information of the target network comprises:
analyzing energy consumption of the target network according to the preset energy-saving strategy and the load information to obtain the energy consumption information of the target network; and
analyzing quality of service of the cell in the target network according to the preset energy-saving strategy and the load information to obtain the terminal device information.

6. The data processing method of claim 5, wherein analyzing quality of service of the cell in the target network according to the preset energy-saving strategy and the load information to obtain the terminal device information comprises:
delivering the preset energy-saving strategy and the load information to the cell in the target network, for a terminal device in the cell to perform quality of service analysis based on the preset energy-saving strategy and the load information to generate the terminal device information; and
receiving the terminal device information fed back by the cell.

7. The data processing method of claim 6, wherein determining a target energy-saving strategy corresponding to the target network according to the load information, the prediction information, and the energy-saving strategy constraint information comprises:
formulating the target energy-saving strategy corresponding to the target network according to the load information, the energy consumption information, and the terminal device information, in response to determining that the target network satisfies the energy-saving strategy constraint information.

8. The data processing method of claim 1, wherein after delivering the target energy-saving strategy to a cell in the target network, the method further comprises:
receiving a progress request sent by the cell, and feeding back achievement status information of the target energy-saving strategy to the cell;
or
sending the achievement status information of the target energy-saving strategy to the cell based on a preset time interval.

9. A base station, comprising: a memory, a processor, and a computer program stored in the memory and executable by the processor, wherein the computer program, when executed by the processor, causes the processor to perform the data processing method of any one of claims 1 to 8.

10. A computer-readable storage medium, storing a computer-executable program which, when executed by a computer, causes the computer to implement the data processing method of any one of claims 1 to 8.
